# EUROPÄISCHE PATENTSCHRIFT

(11) **EP 3 510 374 B1**
(45) Veröffentlichungstag und Bekanntmachung des Hinweises auf die Patenterteilung: **21.02.2024**
(21) Anmeldenummer: 17772617.1
(22) Anmeldetag: 07.09.2017
(51) Int. Cl.: G01M 17/007

(54) **MODULARER PRÜFSTAND FÜR FAHRBEREITE GESAMTFAHRZEUGE**
MODULAR TEST STAND FOR WHOLE VEHICLES WHICH ARE READY FOR DRIVING
BANC D'ESSAI MODULAIRE POUR VÉHICULES COMPLETS PRÊTS À ROULER

(30) Priorität: 12.09.2016 AT 508092016
(43) Veröffentlichungstag der Anmeldung: 17.07.2019
(73) Patentinhaber: AVL List GmbH, 8020 Graz (AT)
(72) Erfinder: SCHYR, Christian, 69120 Heidelberg (DE); DÜSER, Tobias, 64625 Bensheim (DE); WECK, Thomas Reinhold, 65589 Hadamar (DE); SCHICK, Bernhard, 87448 Waltenhofen (DE)
(74) Vertreter: Patentanwälte Pinter & Weiss OG
(86) Internationale Anmeldenummer: PCT/EP2017/072490
(87) Internationale Veröffentlichungsnummer: WO 2018/046609

(56) Entgegenhaltungen:
- EP-A1- 2 602 602
- DE-A1-102010 016 587
- US-A1- 2007 260 438

## Beschreibung

Die gegenständliche Erfindung behandelt einen Fahrzeugprüfstand für ein, ein Lenksystem und einen Antriebsstrang aufweisendes, fahrbereites Gesamtfahrzeug, wobei der Fahrzeugprüfstand im bestimmungsgemäßen Einsatz zum Aufbringen von Kräften auf das fahrbereite Gesamtfahrzeug ausgebildet ist, wobei ein Antriebsstrangmodul vorhanden ist, das aus einem zweiten Grundkörper und einem relativ dazu verdrehbaren Antriebsaktor besteht, wobei der Antriebsaktor über eine zweite mechanische Schnittstelle drehfest mit einer Antriebsachse des Antriebsstrangs verbindbar ist und der zweite Grundkörper mit einem zweiten Montagepunkt mechanisch verbunden ist, der sich am Fahrzeugprüfstand befindet, wobei das Antriebsstrangmodul dazu ausgebildet ist, durch eine relative Verdrehung des Antriebsaktors zum zweiten Grundkörper ein Drehmoment zu erzeugen, das an die Antriebsachse applizierbar ist. Die Erfindung betrifft weiters ein Verfahren zum Aufbringen von Kräften und/oder Momenten auf ein fahrbereites Gesamtfahrzeug an einem Fahrzeugprüfstand.

Um Fahrerassistenzsysteme, wie beispielsweise Antiblockiersysteme, Tempomaten, Spurassistenten, Stablisierungssysteme, usw., eines fahrbereiten Gesamtfahrzeugs zu testen ist es möglich, Fahrzeugbewegungen in einer virtuellen Umgebung mit umfassenden Straßen- und Verkehrsmodellen zu simulieren. Dazu werden im Fahrzeug verbaute Sensoren (Ultraschallsensoren, Kameras, Radars, GPS-Tracker, usw.), sowie im Fahrzeug vorkommende Kommunikationseinrichtungen, bzw. Kommunikationsprotokolle, sowohl Auto-zu-Auto (Car-to-Car, C2C), als auch Infrastruktur-zu-Auto (Infrastructure-to-Car, I2C) an eine Simulationsplattform angebunden und emuliert bzw. simuliert. Zusätzlich ist es wünschenswert das Fahrzeug unter denselben energetischen Zuständen wie in einem realen Fahrversuch zu betreiben. Damit können sicherheitskritische Fahrmanöver unter reproduzierbaren Bedingungen einschließlich der menschlichen Interaktion in die Simulation eingebunden werden. Das Fahrzeug oder ein Teil davon, beispielsweise ein Antriebsstrang, wird auf einem Prüfstand als reale Hardware aufgebaut und betrieben. Dem Fahrzeug werden dabei am Prüfstand mittels geeigneter Aktuatoren die in der Simulation berechneten Kräfte, Momente, etc. eingeprägt, sodass das am Prüfstand an sich ortsfest angeordnete Fahrzeug dieselben Fahrzustände erlebt, wie das virtuelle Fahrzeug in der Simulation. Hierzu müssen am Prüfstand somit Kräfte und/oder Momente auf das Fahrzeug, insbesondere den Antriebsstrang und das Lenksystem aufgebracht werden.

Prinzipiell könnten bekannte Prüfstandsanordnungen für das Aufbringen von Kräften auf das Fahrzeug verwendet werden. Die EP 1 596 179 A2 beispielsweise beschreibt einen Fahrzeugfunktionsprüfstand, bei dem Belastungseinrichtungen an die Räder, Radflansche oder Radnaben angebracht werden, wobei die Belastungseinrichtungen bewegbar ausgestaltet sind, um Lenkbewegungen zumindest teilweise folgen zu können. Damit wäre eine dynamische Aufbringung von Kräften in den Antriebsstrang ermöglicht.

Die DE 20 2011 050 806 U1 andererseits beschreibt einen ferngesteuerten Lenkungsprüfstand zum Steuern eines Lenkungssteuergerätes. Hierzu werden ein Lenkmoment und ein Lenkwinkel an einer Lenkvorrichtung gemessen und auftretende Lenkgeschwindigkeiten und Kräfte ausgewertet. Auch die DE 10 2006 016 764 A1 beschreibt ein ähnliches Verfahren zum Prüfen des Lenksystems eines Kraftfahrzeugs

Ein Lenksystemprüfstand oder ein Antriebsstrangprüfstand, sind jedoch nicht für Tests von Fahrerassistenzsystemen geeignet, da jeweils nur eine Kraft auf den Antriebsstrang oder das Lenksystem einwirkt. Zudem sind diese Prüfstände meist nicht für fahrbereite Gesamtfahrzeuge vorgesehen.

Es sind auch Prüfstände bekannt, die sowohl Antriebsmomente und Lenkmomente berücksichtigen. Diese Prüfstände sind zwar für fahrbereite Gesamtfahrzeuge geeignet, werden jedoch hauptsächlich zur Qualitätskontrolle am Bandende der Fahrzeugfertigung eingesetzt, weswegen sie eine beschränkte Dynamik aufweisen und für Prüfstandanwendungen ungeeignet sind. Die EP 1 760 446 A2 zeigt einen derartigen Fahrzeugprüfstand, bei dem zwei translatorische und ein rotatorischer Freiheitsgrad direkt auf die Räder, Radflanschen oder Radnaben aufgebracht werden. Da für die Simulation von realistischen Verkehrsszenarien eine hochdynamische Anbindung notwendig ist, sind derartige Systeme ebenso für den Test von Fahrerassistenzsystemen ungeeignet.

Die EP 2 602 602 A1 offenbart einen Fahrzeugprüfstand, welcher eine Aufbringung diverser Kräfte (Längskraft, Seitenführungskraft, Radaufstandskraft, Lenkkraft), wie auch eines Antriebsmomentes auf ein Prüfrad ermöglicht. Es sind extra Aktoren für Kräfte und Antriebsmoment vorgesehen, jedoch sowohl Kräfte, als auch Antriebsmoment über eine komplexe Konstruktion gemeinsam auf das Prüfrad aufgebracht.

Die US 2007 260438 A1 offenbart eine Vorrichtung zum Aufbringen von Kräften auf ein Prüfrad, wobei eine Mehrzahl von Aktoren vorgesehen ist. Die DE 10 2010 016587 A1 beschreibt einen Radsatz, welcher zur Aufbringung von Kräften auf ein Fahrzeug geeignet ist. Die spezielle Konstruktion des Radsatzes ermöglicht es die Nabe von der Felge zu entkoppeln und damit bei stillstehenden Reifen Prüfläufe durchzuführen.

Es ist somit die Aufgabe der gegenständlichen Erfindung, einen einfacher aufgebauten Fahrzeugprüfstand sowie ein einfaches Verfahren zum möglichst genauen Aufbringen von Kräften und Momenten auf ein fahrbereites Gesamtfahrzeug auf einem Fahrzeugprüfstand bereitzustellen, mit welchen eine Simulation von realistischen Verkehrsszenarien und damit ein Test von Fahrerassistenzsystemen eines fahrbereiten Gesamtfahrzeugs ermöglicht wird.

Diese Aufgabe wird erfindungsgemäß mit dem eingangs genannten Fahrzeugprüfstand dadurch gelöst, dass ein Lenkkraftmodul vorhanden ist, das aus einem ersten Grundkörper und einem relativ dazu verschiebbaren Querkraftaktor besteht, wobei der Querkraftaktor über eine erste mechanische Schnittstelle mit einer ausgehängten Spurstange des Lenksystems verbindbar ist, und der erste Grundkörper mit einem ersten ortsfesten Montagepunkt mechanisch verbindbar ist, der sich am Chassis des Gesamtfahrzeugs befindet, wobei das Lenkkraftmodul dazu ausgebildet ist, durch eine relative Verschiebung des Querkraftaktors zum ersten Grundkörper eine Querkraft zu erzeugen, die an das Lenksystem applizierbar ist und dass der zweite Montagepunkt ein ortsfester Montagepunkt ist.

Der erfindungsgemäße Fahrzeugprüfstand stellt somit einen hochdynamischen Prüfstand dar, der die Aufbringung von hochdynamischen Kräften und Beschleunigungen auf das fahrbereite Gesamtfahrzeug erlaubt. Im Gegensatz dazu wäre an einem stationären Prüfstand keine dynamische Aufbringung von Kräften vorgesehen. An einem Transientenprüfstand hingegen wären stationäre und auch geringdynamische Kräfte und Beschleunigungen an ein fahrbereites Gesamtfahrzeug aufgebracht. Geringdynamische Kräfte und Beschleunigungen weisen Gradienten auf, die geringer sind, als sie üblicherweise im normalen Fahrbetrieb auftreten, z.B. eine konstante Beschleunigung des Fahrzeugs von 0 auf 100 km/h über 30 Sekunden -womit kein realistischer Fahrbetrieb simuliert werden könnte. Im Gegensatz dazu können hochdynamische Kräfte und Bewegungen, deren Aufbringung der erfindungsgemäße Prüfstand erlaubt, so hohe Gradienten aufweisen, wie sie im realen Fahrbetrieb möglich sind. Dies betrifft die Simulation von z.B. schlupfenden Rädern, Schleudermanövern, Slalomfahrten, usw.

Unter einem fahrbereiten Gesamtfahrzeug wird ein Fahrzeug, das für den öffentlichen Verkehr zugelassen ist, verstanden. Natürlich muss ein fahrbereites Gesamtfahrzeug am Prüfstand mittels Haken, Schrauben, Ketten usw. gefesselt werden. An hochdynamischen Prüfständen sind meist Stangen zur Fesselung notwendig, da diese steifer als eine Kettenfesselung sind und damit auch den hohen Dynamiken der beaufschlagten Kräfte widerstehen können. Oftmals sind Adapter auf der Radnabe erforderlich, die Räder können auch abmontiert sein. Es sind mechanische Modifikationen, die in einfacher Weise von einem Mechaniker im Sinne einer Werkstattprüfung auf und abbaubar sind - z.B. auch das Aushängen einer Spurstange - möglich. Das Gesamtfahrzeug bleibt somit fahrbereit, so lange durch einen Eingriff keine neue Prüfung auf Straßenzulassung bzw. eine Nachabnahme durch eine vorgesehene Behörde, z.B. den TÜV, notwendig ist. Auch ein Abhören von Bussen oder auch ein Einbringen von Signalen auf Busse, wie beispielsweise einem CAN-Bus ist somit erlaubt. Eine permanente Modifikation des fahrbereiten Gesamtfahrzeugs, d.h. z.B. eines Buses, die nicht durch Werkstattmechaniker rückgängig machbar ist, d.h. wodurch das Fahrzeug die Straßenzulassung verliert, ist jedoch nicht zulässig.

Dadurch, dass die Spurstange des fahrbereiten Gesamtfahrzeugs ausgehängt ist, sind Antriebsstrang und Lenksystem einzeln mit Kräften oder Momenten beaufschlagbar. Durch eine konstruktive Trennung des Lenkkraftmoduls des Antriebsstrangmoduls wird auch auf Prüfstandseite eine Entkopplung der auf das Gesamtfahrzeug, bzw. das Lenksystem und den Antriebsstrang des Gesamtfahrzeugs, einwirkende Längsdynamik und der Querdynamik ermöglicht. Die Längsdynamik wird über den hochdynamischen Antriebsaktor auf den Antriebsstrang aufgebracht, die Querdynamik wird über den hochdynamischen Querkraftaktor über die Spurstange auf das Lenksystem aufgebracht. Damit kann sowohl jeweils eine höhere Längsdynamik, als auch höhere Querdynamik erreicht werden, als es bei Systemen, bei welchen Antriebsaktor und Querkraftatkor gekoppelt sind, möglich wäre. So ist eine Simulation eines Fahrzeugs unter denselben energetischen Zuständen wie im realen Fahrversuch und damit auch ein realitätsnaher Test von Fahrerassistenzsystemen möglich.

Es kann am erfindungsgemäßen Fahrzeugprüfstand auch ein zweites Lenkkraftmodul vorhanden sein, das aus einem dritten Grundkörper und einem weiteren quer verschiebbaren Querkraftaktor besteht, wobei der weitere Querkraftaktor über eine dritte mechanische Schnittstelle mit der ausgehängten Spurstange des Lenksystems verbindbar ist, und der dritte Grundkörper mit einem dritten ortsfesten Montagepunkt verbindbar ist, wobei das zweite Lenkkraftmodul dazu ausgebildet ist, durch eine relative Verschiebung des weiteren Querkraftaktors zum dritten Grundkörper eine weitere Querkraft zu erzeugen, die an das Lenksystem applizierbar ist. Damit ist es möglich beispielsweise an die linke und rechte Seite der Spurstange unterschiedliche Querkräfte wirken zu lassen. Auch kann natürlich dieselbe Querkraft jeweils an unterschiedlichen Stellen der Spurstange appliziert werden um beispielsweise eine gleichmäßige Kraftbelastung, insbesondere vorhandener Lager, zu erreichen.

Es kann am erfindungsgemäßen Fahrzeugprüfstand ein weiteres Antriebsstrangmodul vorhanden ist, das aus einem vierten Grundkörper und einem weiteren axial verdrehbaren Antriebsaktor besteht, wobei der weitere Antriebsaktor über eine vierte mechanische Schnittstelle mit dem Antriebsstrang des Fahrzeugs verbindbar ist und der vierte Grundkörper mit einem vierten ortsfesten Montagepunkt verbindbar ist, wobei das weitere Antriebsstrangmodul dazu ausgebildet ist, durch eine relative Verdrehung des weiteren Antriebsaktors zum vierten Grundkörper ein von der Querkraft unabhängiges weiteres Drehmoment zu erzeugen, das an den Antriebsstrang applizierbar ist. Damit ist es möglich beispielsweise an die linke und rechte Antriebsachse des Antriebsstrangs unterschiedliche Drehmomente oder auch das selbe Drehmoment wirken zu lassen. Dies kann insbesondere erforderlich sein, wenn die linke und die rechte Antriebsachse nicht starr verbunden sind, d.h. keine Potentialsperre aktiviert ist.

Der dritte ortsfeste Montagepunkt und/oder der vierte ortsfeste Montagepunkt kann sich jeweils am Prüfstand oder auch am Gesamtfahrzeug, vorzugsweise Chassis, befinden. Dabei können der erste und zweite, bzw. sofern vorhanden auch der dritte und/oder der vierte Grundkörper natürlich auch direkt verbunden oder auch identisch sein. Sowohl für die mechanischen Schnittstellen, als auch die Montagepunkte können Schnellkuppelsysteme zum raschen Auf- und Abbau des fahrbereiten Gesamtfahrzeugs am Leistungsprüfstand verwendet werden.

Es ist auch möglich, dass ein vorhandenes Drehmomentmodul durch ein Lenkkraftmodul nachgerüstet wird um einen erfindungsgemäßen Fahrzeugprüfstand zu bilden. Ein Drehmomentmodul ist beispielsweise als Teil eines Antriebsstrangprüfstandes in Form von Lastmaschinen bereits vorhanden. Diese Lastmaschinen weisen ein Massenträgheitsmoment auf, das dem realen Rad entspricht. Die Verwendung eines Antriebsstrangprüfstands als Drehmomentmodul ist natürlich nur möglich, wenn die vorhandenen Lastmaschinen die hochdynamischen Anforderungen erfüllen. In Antriebsstrangprüfständen werden die Lastmaschinen mit den Radnaben oder den Radflanschen des Fahrzeugs, bzw. mit damit angebrachten Adapterscheiben verbunden und ermöglichen bei der ursprünglichen Verwendung eine realistische Reifenschlupfsimulation. Es sind oftmals Verschiebeeinrichtung für die Lastmaschinen vorhanden, die eine Anpassung an unterschiedliche Fahrzeugabmessungen erlauben. Eine vertikale Abstützung des Fahrzeugchassis erfolgt meist durch spezielle Lagermodule, welche drehbar um die Längachse ausgeführt und ein realistisches Einfedern des Fahrzeugs in der Ruhelage ermöglichen. Zudem ist meist ein Hubwagen zum Ein- bzw. Ausbringen des Fahrzeugs auf dem Prüfstand vorgesehen.

Ein Drehmomentmodul kann beispielsweise auch an einem Rollenprüfstand vorhanden sein. Ein Rollenprüfstand weist Rollen mit verschiebbaren Abdeckungen in Längs- und Querrichtung auf. Eine Fesselung des Fahrzeugs auf den Rollen erfolgt durch Ketten oder durch Stangen, womit ein Drehmoment über die Rollen auf die Räder des Fahrzeugs und in weiterer Folge auf den Antriebsstrang aufgebracht wird. Auch für die Verwendung eines Antriebsstrangsprüfstands als Drehmomentmodul gilt, dass die hochdynamischen Anforderungen erfüllt werden müssen.

Für die Anbringung des Lenkkraftmoduls ist beispielsweise ein vorhandener freier Bauraum im Vorderbereich des Fahrzeugs am Antriebsstrangprüfstand bzw. Rollenprüfstand nutzbar. Dabei ist natürlich darauf zu achten, dass sowohl vorhandene Lüfter als auch das Lenckraftmodul keine Störungen bzw. fehlerhafte Erkennungen eines im Frontbereich des Fahrzeugs angebrachten Radaremulators erzeugen. Die Montage eines erfindungsgemäßen Lenkkraftmoduls an einem Antriebsstrangprüfstand, Rollenprüfstand, oder dergleichen, kann innerhalb von 30 Minuten durch einen Mechaniker erfolgen. Vorzugsweise kann die Montage des Lenkkraftmoduls auch außerhalb des Prüfraums, z.B. auf einer Hebebühne erfolgen.

Leistungselektronik, die den Fahrzeugprüfstand oder einen Teil davon, z.B. das Lenkkraftmodul oder das Antriebsstrangmodul, mit Leistung versorgt kann in ein am Gesamtfahrzeug vorhandenes Mechanikmodul integrierbar sein oder in einem mobilen oder festen Schrank, bzw. Trolley, außerhalb des Fahrzeugs untergebracht sein. Dieser Schrank kann im Prüfraum, aber auch im Bedienraum, z.B. in einem Schaltschrank oder Umrichterschrank, untergebracht werden.

Es kann für das Lenkkraftmodul und/oder das Antriebsstrangmodul vorteilhafterweise eine Schwenkeinrichtung vorgesehen ist, die es ermöglicht das Lenkkraftmodul und/oder das Antriebsstrangmodul vom Gesamtfahrzeug, vorzugweise horizontal, zu verschwenken. Dazu ist die Schwenkeinrichtung mit dem fahrbereiten Gesamtfahrzeug und dem Lenkkraftmodul bzw. dem Antriebsstrangmodul, verbunden. Die Verwendung einer Schwenkeinrichtung kann z.B. für die Ein- und Ausbringung des fahrbereiten Gesamtfahrzeugs auf bzw. aus dem Fahrzeugprüfstand hilfreich sein, insbesondere wenn die Schwenkeinrichtung derart konzipiert ist, dass keine zusätzlichen Hebe- oder Transportvorrichtungen notwendig sind.

Das Lenkrad im Gesamtfahrzeug kann durch einen realen Fahrer direkt situationsabhängig genutzt werden um eine Lenkkraft auf die Lenkachse auszuüben z.B. bei einer Übernahme vom einem autonomen, d.h. elektronikgesteuerten, in den manuellen Fahrbetrieb.

Vorteilhafterweise ist ein Lenkaktor vorhanden, der mit einer Lenkachse des Lenksystems verbindbar ist und ausgestaltet ist eine Lenkkraft auf die Lenkachse auszuüben. In diesem Fall würde bei Wirken einer Lenkkraft das Lenkrad frei mitdrehen. Ganz besonders vorteilhafterweise dient ein im Gesamtfahrzeug vorhandener Motor, z.B. ein Teil der Servolenkung, als Lenkaktor.

Am erfindungsgemäßen Fahrzeugprüfstand kann eine Simulationseinheit vorhanden sein, die mit den Lenkkraftmodulen, den Antriebsstrangmodulen und sofern vorhanden mit dem Lenkaktor verbunden bzw. verbindbar ist um diesen Werte für Querkraft, Drehmoment und ggf. Lenkkraft vorgibt. Die Simulationseinheit kann ebenso mit Sensoren, wie beispielsweise Ultraschallsensoren, Kameras, Radars, GPS-Tracker, usw., des fahrbereiten Gesamtfahrzeugs verbunden sein um die Simulationsumgebung auch auf Sensorseite herzustellen. Diese Verbindung kann über von der Simulationseinheit gesteuerte Aktoren erfolgen, die die Sensoren mit externen Signalen beaufschlagen, was beispielsweise bei GPS oder Ultraschall-Sensoren möglich ist. Bei gewissen Sensoren (z.B. Kameras) ist eine derartige Beaufschlagung von Signalen allerdings nicht in einfacher Weise möglich. Daher können auch von der Simulationseinheit vorgegebene elektrische Signale einspeist werden um die Sensoren zu simulieren. Dies kann erfolgen, indem die vorhandenen Sensoren abgesteckt werden und das Simulationsmodul über geeignete Adapter mit dem Steckern, an welchem sich der jeweilige Sensor befand verbunden wird. Alternativ können von der Simulationseinheit gelieferte Signale auch nach dem Sensor in den Bus einspeist werden. Damit kann das Simulationsmodul auch die Sensoren des fahrbereiten Gesamtfahrzeugs ansteuern und gewünschte Fahrsituationen simulieren. Ein derartiger Eingriff in die Sensoren ist jedoch nur erlaubt, sofern er durch einen Mechaniker rückgängig machbar ist, d.h. keine Nachabnahme notwendig macht. Es ist natürlich auch eine Anbindung der Simulationseinheit an ein Steuergerät des fahrbereiten Gesamtfahrzeugs möglich.

Der erfindungsgemäße Fahrzeugprüfstand kann zur Bereitstellung einer Integrations-, Kalibrier- und Testumgebung für Fahrerassistenzsysteme eines Gesamtfahrzeugs verwendet werden. Längsdynamik und Querdynamik können von der Simulationseinheit unabhängig voneinander berechnet, ausgewertet und auf das Lenksystem bzw. den Antriebsstrang aufgebracht werden. Eine Validierung der integrierten Systeme und Funktionen in komplexen Testszenarien ist dennoch in Form einer gesamtheitlichen Betrachtung möglich. Durch die erreichte höhere Dynamik wird die Lücke zwischen einem Hardware-in-the-Loop (HiL) Test, bei dem die Umgebung des Gesamtfahrzeugs simuliert wird und einem realem Fahrversuch, bei dem die tatsächliche Umgebung des Gesamtfahrzeugs in Form von Kräften einwirkt geschlossen. Damit ist ein effizienter und reproduzierbarer Versuchsbetrieb eines voll integrierten autonomen Gesamtfahrzeugs möglich, insbesondere wenn auch Sensoren und/oder Steuergeräte des fahrbereiten Gesamtfahrzeugs mit der Simulationseinheit verbunden sind. Das auf der Simulationseinheit implementierte Simulationsmodell kann auch in eine vorhandene Prüfstandregelung integriert sein, oder diese ansteuern, wozu gegebenenfalls eine entsprechende Signalschnittstelle zur übergeordneten Prüfstandautomatisierung notwendig ist. Die Dynamik der Querkraftaktoren und Antriebsaktoren erlaubt neben der Simulation von Standardmanövern des Gesamtfahrzeugs auch Manöver im Grenzbereich, wie Ausweichtests, Notbremsungen, Offroadfahrten usw. Auch Manöver bei Maximalkräften wie z.B. eine Bordsteinüberfahrt wäre denkbar. Ist ein Lenkradaktor vorhanden, so wird dieser natürlich auch in das auf der Simulationseinheit implementierten Simulationsmodell eingebunden, z.B. in ein untergeordnetes Fahrermodell. Der Lenkradaktor kann auch an einen externen Fahrsimulator angebunden sein, an welchen ein Lenkrad mit Aktor zur Bedienung durch den realen Fahrer aufgebaut ist. Die entsprechenden Anforderungen an ein Echtzeitsystem werden entweder als Teilsystem im Lenkkraftmodul integriert oder in der übergeordneten Prüfstandsregelung oder der Simulationseinheit integriert. Zur Integration des Lenkkraftmoduls in das Simulationsmodell des Gesamtfahrzeugs ist eine entsprechende Signalschnittstelle vorzusehen.

Der Fahrzeugprüfstand kann natürlich auch in Form einer reinen Regelung der Antriebsaktoren und/oder Querkraftaktoren ohne weitere Simulationsmodelle betrieben werden. Es kann zusätzlich ein Fahrzeugmodell simuliert werden oder, wie oben beschrieben, die Fahrzeugumgebung durch das Simulationsmodell eingebunden werden.

Die Aufgabe wird weiters durch ein Verfahren gemäß Anspruch 13 gelöst.

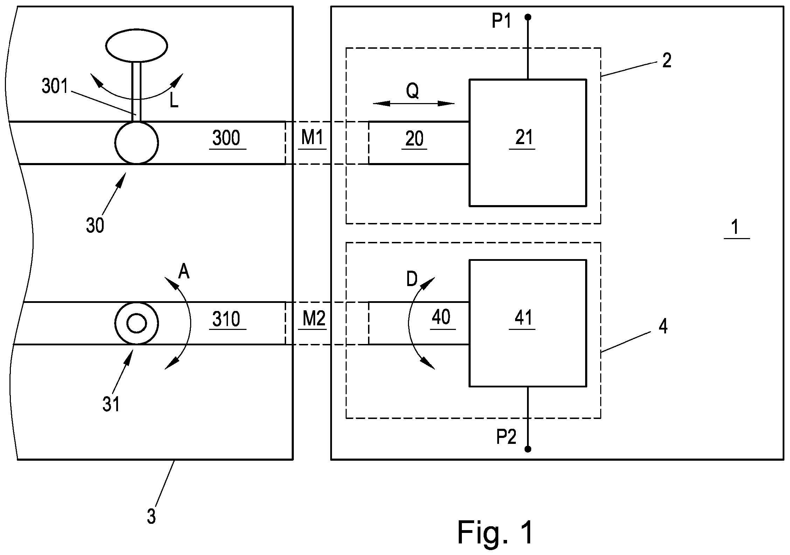

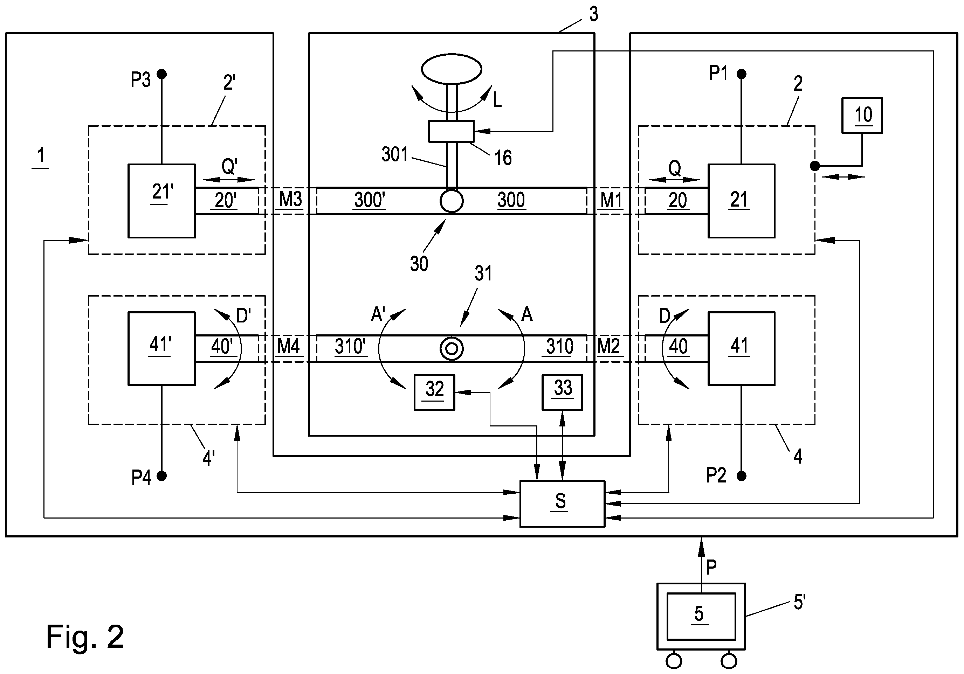

Die gegenständliche Erfindung wird nachfolgend unter Bezugnahme auf die Figuren 1 und 2 näher erläutert, die beispielhaft, schematisch und nicht einschränkend vorteilhafte Ausgestaltungen der Erfindung zeigen. Dabei zeigt
Fig.1 einen mit einem fahrbereiten Gesamtfahrzeug verbundenen Fahrzeugprüfstand mit einem Lenkkraftmodul und einem Antriebsstrangmodul,
Fig.2 einen mit einem fahrbereiten Gesamtfahrzeug verbundenen Fahrzeugprüfstand mit jeweils zwei Lenkkraftmodulen und Antriebsstrangmodulen.

In Fig. 1 ist ein Fahrzeugprüfstand 1 mit einem Lenkkraftmodul 2 und einem Antriebsstrangmodul 4, sowie ein fahrbereites Gesamtfahrzeug 3 (das nur schematisch und zum Teil dargestellt ist) ersichtlich. Das Lenkkraftmodul 2 zeichnet sich durch einen ersten, ortsfest angeordneten Grundkörper 21 und einen dazu quer verschiebbaren Querkraftaktor 20 aus. Eine Querkraft Q ist also über eine relative Verschiebung des Querkraftaktors 20 zum ersten Grundkörper 21 erzeugbar. Hierzu ist es erforderlich, dass der erste Grundkörper 21 mit einem ersten ortsfesten Montagepunkt P1, welcher sich in dieser Ausgestaltung am Fahrzeugprüfstand 1 befindet, verbunden ist. In diesem Fall ist es vorteilhaft, den ersten Montagepunkt P1 bzw. den ersten Grundkörper 21 mit dem Querkraftaktor 20 verschiebbar anzuordnen, um diese auf einfache Weise an verschiedene Arten von Gesamtfahrzeugen 3 ausrichten zu können. Nach dem korrekten Positionieren des ersten Grundkörpers 21 wird dieser am Fahrzeugprüfstand 1 ortsfest arretiert. Alternativ wäre es beispielsweise auch möglich, den ersten Montagepunkt P1 am fahrbereiten Gesamtfahrzeug 3 zu wählen. Der Querkraftaktor 20 ist über eine erste mechanische Schnittstelle M1 mit einer ausgehängten Spurstange 300 des Lenksystems 30 des Gesamtfahrzeugs 3 verbunden, womit die Querkraft Q auf die Spurstange 300 und damit auf das Lenksystem 30 des fahrbereiten Gesamtfahrzeugs 3 applizierbar ist.

Das Antriebsstrangmodul 4 weist einen zweiten Grundkörper 41 und einen relativ dazu verdrehbaren Antriebsaktor 40 auf. In gleicher Weise wird der zweite Grundkörper 41 mit einem zweiten ortsfesten Montagepunkt P2 am Fahrzeugprüfstand 1 oder am Gesamtfahrzeug 3 verbunden. Auch der zweite Grundkörper 41 kann am Fahrzeugprüfstand 1 positionierbar und arretierbar ausgeführt sein. Der Antriebsaktor 40 ist über eine zweite mechanische Schnittstelle M2 mit einer Antriebsachse 310 des Antriebsstrangs 31 des fahrbereiten Gesamtfahrzeugs 3 verbunden. Die mechanische Kopplung kann über bekannte Schnellkuppelsysteme erfolgen. Ein Drehmoment D kann also durch Verdrehung des Antriebsaktors 40 gegenüber den zweiten Grundkörper 41 erzeugt und über die zweite mechanische Schnittstelle M2 auf die Antriebsachse 310 übertragen werden. Das Drehmoment D kann somit unabhängig von der Querkraft Q eingebracht werden.

Eine weitere Ausgestaltung ist in Fig.2 zu finden, wobei jeweils zwei Lenkkraftmodule 2, 2' und zwei Antriebsstrangmodule 4, 4' vorhanden sind, um auf beiden Seiten des Gesamtfahrzeugs 3 eine Querkraft Q und/oder ein Drehmoment D einzuprägen. Das erste und zweite Lenkkraftmodul 2 und 2`, sowie das erste und zweite Antriebsstrangmodul 4 und 4` sind in gleicher Weise wie das erste Lenkkraftmodul 2 in Fig. 1 ausgestaltet: Ein weiterer quer verschiebbarer Querkraftaktor 20' ist über eine dritte mechanische Schnittstelle M3 mit der ausgehängten Spurstange 300 des Lenksystems 30 des fahrbereiten Gesamtfahrzeugs verbunden. Ein dritter Grundkörper 21' mit einem dritten ortsfesten Montagepunkt P3, hier abermals am fahrbereiten Gesamtfahrzeug 3 verbunden. Eine weitere Querkraft Q' wird durch eine relative Verschiebung des weiteren Querkraftaktors 20' zum dritten Grundkörper 21' erzeugt und über eine dritte mechanische Schnittstelle M3 über die Spurstange 300 an das Lenksystem 30 appliziert. Das weitere Antriebsstrangmodul 4' besteht aus einem vierten Grundkörper 41' und einem weiteren axial verdrehbaren Antriebsaktor 40`. Der weitere Antriebsaktor 40' ist über eine vierte mechanische Schnittstelle M4 mit dem Antriebsstrang 31 des fahrbereiten Gesamtfahrzeugs Fahrzeugs 3 verbunden. Der vierte Grundkörper 41' mit einem hier abermals am Fahrzeugprüfstand befindlichen vierten ortsfesten Montagepunkt P4 verbunden. Damit wird ein von der Querkraft Q und der weiteren Querkraft Q' unabhängiges weiteres Drehmoment D' durch eine relative Verdrehung des weiteren Antriebsaktors 40' zum vierten Grundkörper 41' erzeugt und auf den Antriebsstrang 31 appliziert. Das weitere Drehmoment D' kann dabei unabhängig vom Drehmoment D sein, oder auch abhängig, selbst identisch sein. Auch die weitere Querkraft Q' kann unabhängig oder abhängig von der oder auch identisch mit der Querkraft Q sein.

Der erste, zweite, dritte und vierte Montagepunkt P1, P2, P3, P4 befinden sich in Fig. 1 und 2 am Prüfstand 1 selbst. Wie erwähnt, kann sich auch nur ein Teil oder keiner dieser Montagepunkte P1, P2, P3, P4 am Prüfstand 1 befinden. Alternativ kann sich auch ein Teil, alle oder keiner dieser Montagepunkte P1, P2, P3, P4 am fahrbereiten Gesamtfahrzeug 3 befinden. Wesentlich ist, dass die Grundkörper 21, 21', 41, 41' über die Montagepunkte P1, P2, P3, P4 gegenüber der Querbewegung bzw. Drehung der Lenkkraftaktoren 21, 21' , bzw. Antriebsaktoren 40, 41 ortsfest verankert werden.

In Fig. 2 ist ein, vorzugsweiser mobiler, Schrank 51 vorgesehen, in welchem Leistungselektronik 5, die den Fahrzeugprüfstand 1 mit Leistung P versorgt, untergebracht ist. Dieser Schrank kann an beliebiger Stelle im Prüfraum oder im Bedienraum, auch in einem vorhandenen Schaltschrank oder Umrichterschrank, untergebracht werden. Alternativ könnte die Leistungsleektronik (die auch Lenkkraftmodule 2, 2' und/oder Antriebsstrangmodule 4, 4' direkt mit Leistung P versorgen könnte) auch in ein am Gesamtfahrzeug 3 vorhandenes Mechanikmodul integriert sein.

Fig. 2 zeigt zudem auf Seite des Lenkkraftmoduls 2 auch eine Schwenkeinrichtung 10, die ausgestaltet ist um das Lenkkraftmodul 2 vom Gesamtfahrzeug 3 zu verschwenken. Dazu ist die Schwenkeinrichtung 10 jeweils mit dem Lenkkraftmodul 2 und dem Prüfstand 1 verbunden. Natürlich wäre es auch möglich die Schwenkeinrichtung 10 auszugestalten um das zweite Lenkkraftmodul 2` und/oder das Antriebsstrangmodul 4 und/oder das zweite Antriebsstrangmodul 4' vom Gesamtfahrzeug 3 zu verschwenken, wobei natürlich die jeweiligen Lenkkraftmodule 2, 2' bzw. Antriebsstrangmodule 4, 4' mit der Schwenkeinrichtung 10 verbunden sein müssen. Ebenso wäre eine Installation von mehreren Schwenkeinrichtungen 10 möglich, die jeweils ausgestaltet sind um einzelne oder mehrere Lenkkraftmodule 2, 2' und/oder Antriebsstrangmodule 4, 4' jeweils unabhängig vom Gesamtfahrzeug 3 zu verschwenken. Ein Verschwenken der Lenkkraftmodule 2, 2' bzw. der Antriebsstrangmodule 4, 4' vom Gesamtfahrzeug 3 ist natürlich nur möglich, wenn zuvor die jeweiligen menchanischen Schnittstellen M1, M2, M3, M4 gelöst wurden. Damit kann das Gesamtfahrzeug 3 nach einem Wegschwenken der jeweiligen Lenkkraftmodule 2, 2' bzw. Antriebsstrangmodule 4, 4' schnell und in einfacher Weise vom Fahrzeugprüfstand 1 entfernt werden, ohne dass umfangreiche Umbauten am Fahrzeugprüfstand 1 notwendig sind. Auch ein Einbringen des Gesamtfahrzeugs in den Fahrzeugprüfstand 1 kann in gleicher Weise durch Verwendung von Schwenkeinrichtungen 10 erleichtert werden.

Ebenso ist in Fig. 1 und Fig. 2 eine an einer Lenkachse 301 aufgebrachte Lenkkraft L ersichtlich, die wiederum auf die Spurstange 300 wirkt. Diese Lenkkraft L kann über einen realen Fahrer über ein Lenkrad an die Lenkachse 301 aufgebracht werden. In Fig. 2 wird jedoch ein Lenkaktor 16, beispielsweise ein Lenkroboter, verwendet. Als Lenkaktor 16 kann natürlich auch ein bereits vorhandener Lenkantrieb des Gesamtfahrzeugs 3, beispielsweise für autonomes Fahren oder für eine Parkfunktion, verwendet werden.

Zudem ist in Fig. 2 eine Simulationseinheit S ersichtlich, die mit den Lenkkraftmodulen 2, 2' und den Antriebsstrangmodulen 4, 4` verbunden ist und diesen Sollwerte für Querkraft Q, Q`, und Drehmoment D, D' vorgibt. Ebenso ist die Simulationseinheit S mit dem Lenkaktor 16 verbunden und gibt diesem eine Lenkkraft L vor. In der Simulationseinheit S kann eine virtuelle Fahrt mit dem Gesamtfahrzeug durch eine virtuelle Umgebung simuliert werden. Die dabei auf das Gesamtfahrzeug 3 auftretenden Belastungen werden in Sollwerte für Querkraft Q, Q`, und Drehmoment D, D', und gegebenenfalls auch für die Lenkkraft L, umgerechnet und durch ein Lenkkraftmodul 2, 2' und/oder Antriebsstrangmodul 4, 4`, bzw. gegebenenfalls den Lenkaktor 16 in das Gesamtfahrzeug 3 am Fahrzeugprüfstand 1 eingeprägt. Allfällige dafür notwendige Regler, Leistungselektronik, Antriebe sind hierbei aus Gründen der Übersichtlichkeit nicht dargestellt. Damit kann der Fahrzeugprüfstand 1 zur Bereitstellung einer Integrations-, Kalibrier- und Testumgebung für Fahrerassistenzsysteme des Gesamtfahrzeugs 3 verwendet werden. Die Sollwerte für Querkraft Q, Q`, und Drehmoment D, D', und Lenkkraft L können in der Simulationseinheit S selbst berechnet werden oder auch extern zugeführt werden. Als externe Quelle für diese Sollwerte können beispielsweise bereits vorhandene Sensoren 33 oder Steuergeräte 32 am Gesamtfahrzeug 3 dienen - es kann auch auf einen im Gesamtfahrzeug 3 vorhandenen Bus, z.B. einen CAN-Bus, zugegriffen werden. Zu diesem Zweck ist in Fig. 2 die Simulationseinheit S mit Sensoren 33 und einem Steuergerät 32 des Gesamtfahrzeugs 3 verbindbar ausgestaltet.

## Patentansprüche

1. Fahrzeugprüfstand (1) für ein, ein Lenksystem (30) und einen Antriebsstrang (31) aufweisendes, fahrbereites Gesamtfahrzeug (3), wobei der Fahrzeugprüfstand (1) im bestimmungsgemäßen Einsatz zum Aufbringen von Kräften und/oder Momenten auf das fahrbereite Gesamtfahrzeug (3) ausgebildet ist, wobei ein Antriebsstrangmodul (4) vorhanden ist, das aus einem zweiten Grundkörper (41) und einem relativ dazu verdrehbaren Antriebsaktor (40) besteht, wobei der Antriebsaktor (40) über eine zweite mechanische Schnittstelle (M2) drehfest mit einer Antriebsachse (310) des Antriebsstrangs (31) verbindbar ist und der zweite Grundkörper (41) mit einem zweiten Montagepunkt (P2) mechanisch verbunden ist, der sich am Prüfstand (1) befindet, wobei das Antriebsstrangmodul (4) dazu ausgebildet ist, durch eine relative Verdrehung des Antriebsaktors (40) zum zweiten Grundkörper (41) ein Drehmoment (D) zu erzeugen, das an die Antriebsachse (310) applizierbar ist, **dadurch gekennzeichnet, dass** ein Lenkkraftmodul (2) vorhanden ist, das aus einem ersten Grundkörper (21) und einem relativ dazu verschiebbaren Querkraftaktor (20) besteht, wobei der Querkraftaktor (20) über eine erste mechanische Schnittstelle (M1) mit einer ausgehängten Spurstange (300) des Lenksystems (30) verbindbar ist und der erste Grundkörper (21) mit einem ersten ortsfesten Montagepunkt (P1) mechanisch verbindbar ist, der sich am Chassis des Gesamtfahrzeugs (3) befindet, wobei das Lenkkraftmodul (2) dazu ausgebildet ist, durch eine relative Verschiebung des Querkraftaktors (20) zum ersten Grundkörper (21) eine vom Drehmoment (D) unabhängige Querkraft (Q) zu erzeugen, die an das Lenksystem (30) applizierbar ist **und dass** der zweite Montagepunkt (P2) ein ortsfester Montagepunkt ist.

2. Fahrzeugprüfstand (1) nach Anspruch 1, **dadurch gekennzeichnet dass** ein zweites Lenkkraftmodul (2`) vorhanden ist, das aus einem dritten Grundkörper (21') und einem weiteren quer verschiebbaren Querkraftaktor (20`) besteht, wobei der weitere Querkraftaktor (20`) über eine dritte mechanische Schnittstelle (M3) mit der ausgehängten Spurstange (300) des Lenksystems (30) verbindbar ist, und der dritte Grundkörper (21') mit einem dritten ortsfesten Montagepunkt (P3) verbindbar ist, wobei das zweite Lenkkraftmodul (2') dazu ausgebildet ist, durch eine relative Verschiebung des weiteren Querkraftaktors (20`) zum dritten Grundkörper (21') eine weitere Querkraft (Q') zu erzeugen, die an das Lenksystem (30) applizierbar ist.

3. Fahrzeugprüfstand (1) nach Anspruch 1 oder 2, **dadurch gekennzeichnet dass** ein weiteres Antriebsstrangmodul (4`) vorhanden ist, das aus einem vierten Grundkörper (41') und einem weiteren axial verdrehbaren Antriebsaktor (40`) besteht, wobei der weitere Antriebsaktor (40`) über eine vierte mechanische Schnittstelle (M4) mit dem Antriebsstrang (31) des Fahrzeugs (3) verbindbar ist und der vierte Grundkörper (41') mit einem vierten ortsfesten Montagepunkt (P4) verbindbar ist, wobei das weitere Antriebsstrangmodul (4`) dazu ausgebildet ist, durch eine relative Verdrehung des weiteren Antriebsaktors (40`) zum vierten Grundkörper (41') ein von der Querkraft (Q, Q') unabhängiges weiteres Drehmoment (D`) zu erzeugen, das an den Antriebsstrang (31) applizierbar ist.

4. Fahrzeugprüfstand (1) nach einem der Ansprüche 2 oder 3, **dadurch gekennzeichnet, dass** sich der dritte ortsfeste Montagepunkt (P3) und/oder der vierte ortsfeste Montagepunkt (P4) am Prüfstand (1) befindet.

5. Fahrzeugprüfstand (1) nach einem der Ansprüche 2 bis 4, **dadurch gekennzeichnet, dass** sich der dritte ortsfeste Montagepunkt (P3) und/oder der vierte ortsfeste Montagepunkt (P4) am fahrbereiten Gesamtfahrzeug (3), vorzugsweise am Chassis des Gesamtfahrzeugs (3), befindet.

6. Fahrzeugprüfstand (1) nach einem der Ansprüche 1 bis 5, **dadurch gekennzeichnet, dass** eine Schwenkeinrichtung (10) vorgesehen ist, die es ermöglicht das Lenkkraftmodul (2, 2`) und/oder das Antriebsstrangmodul (4, 4`) vom fahrbereiten Gesamtfahrzeug (3), vorzugweise horizontal, zu verschwenken.

7. Fahrzeugprüfstand (1) nach einem der Ansprüche 1 bis 6, **dadurch gekennzeichnet, dass** ein Lenkaktor (16) vorhanden ist, der mit einer Lenkachse (301) des Lenksystems (30) verbindbar ist und ausgestaltet ist eine Lenkkraft (L) auf die Lenkachse (301) auszuüben.

8. Fahrzeugprüfstand (1) nach Anspruch 7, **dadurch gekennzeichnet, dass** ein im fahrbereiten Gesamtfahrzeug (3) vorhandener Motor als Lenkaktor (16) dient.

9. Fahrzeugprüfstand (1) nach einem der Ansprüche 1 bis 6, **dadurch gekennzeichnet, dass** eine Simulationseinheit (S) vorhanden ist, die mit den Lenkkraftmodulen (2, 2`) und den Antriebsstrangmodulen (4, 4') verbunden ist und diesen Werte für Querkraft (Q), und Drehmoment (D) vorgibt.

10. Fahrzeugprüfstand (1) nach einem der Ansprüche 7 oder 8, **dadurch gekennzeichnet, dass** eine Simulationseinheit (S) vorhanden ist, die mit den Lenkkraftmodulen (2, 2`), den Antriebsstrangmodulen (4, 4`) und dem Lenkaktor (16) verbunden ist und diesen Werte für Querkraft (Q), Drehmoment (D) und Lenkkraft (L) vorgibt.

11. Fahrzeugprüfstand (1) nach einem der Ansprüche 9 oder 10, **dadurch gekennzeichnet, dass** die Simulationseinheit (S) mit Sensoren (33) des fahrbereiten Gesamtfahrzeugs (3) verbindbar ist, wobei die Sensoren (33) eine externe Quelle für Sollwerte für die Querkraft (Q, Q') und das Drehmoment (D, D') sind.

12. Fahrzeugprüfstand (1) nach Anspruch 9 oder 11, **dadurch gekennzeichnet, dass** die Simulationseinheit (S) mit einem Steuergerät (32) des fahrbereiten Gesamtfahrzeugs (3) verbindbar ist, wobei das Steuergerät (32) die externe Quelle für die Sollwerte für die Querkraft (Q, Q') und das Drehmoment (D, D') ist.

13. Verfahren zum Aufbringen von Kräften und/oder Momenten auf ein fahrbereites Gesamtfahrzeug (3) an einem Fahrzeugprüfstand (1), wobei das fahrbereite Gesamtfahrzeug (3) ein Lenksystem (30) und einen Antriebsstrang (31) aufweist, wobei ein Antriebsstrangmodul (4), das aus einem zweiten Grundkörper (41) und einem relativ dazu verdrehbaren Antriebsaktor (40) besteht, mit dem Antriebsaktor (40) über eine zweite mechanische Schnittstelle (M2) drehfest mit einer Antriebsachse (310) des Antriebsstrangs (31) verbunden wird und der zweite Grundkörper (41) mit einem zweiten Montagepunkt (P2) mechanisch verbunden wird, der sich am Fahrzeugprüfstand (1) befindet, wobei ein Drehmoment (D) durch eine relative Verdrehung des Antriebsaktors (40) zum zweiten Grundkörper (41) erzeugt wird, und an die Antriebsachse (310) appliziert wird, **dadurch gekennzeichnet, dass** ein Lenkkraftmodul (2), das aus einem ersten Grundkörper (21) und einem relativ dazu verschiebbaren Querkraftaktor (20) besteht, mit dem Querkraftaktor (20) über eine erste mechanische Schnittstelle (M1) mit einer ausgehängten Spurstange (300) des Lenksystems (30) verbunden wird und der erste Grundkörper (21) mit einem ersten ortsfesten Montagepunkt (P1) mechanisch verbunden wird, der sich am Chassis des fahrbereiten Gesamtfahrzeugs (3) befindet, wobei durch eine relative Verschiebung des Querkraftaktors (20) zum ersten Grundkörper (21) eine vom Drehmoment (D) unabhängige Querkraft (Q) erzeugt wird, und an das Lenksystem (30) appliziert wird **und dass** als der zweite Montagepunkt (P2) ein ortsfester Montagepunkt verwendet wird.

## Claims

1. Vehicle test bench (1) for a roadworthy complete vehicle (3) having a steering system (30) and a drivetrain (31), the vehicle test bench (1) in intended use being designed for applying forces and/or torques to the roadworthy complete vehicle (3), a drivetrain module (4) being present which consists of a second main body (41) and a drive actuator (40) that is rotatable relative thereto, the drive actuator (40) being rotationally fixable by means of a second mechanical interface (M2) to a drive axle (310) of the drivetrain (31), and the second main body (41) being mechanically connected to a second mounting point (P2) located on the test bench (1), the drivetrain module (4) being designed to generate by a rotation of the drive actuator (40) relative to the second main body (41) a torque (D) which can be applied to the drive axle (310) **characterized in that** a steering force module (2) is present which consists of a first main body (21) and a transverse force actuator (20) that is displaceable relative thereto, the transverse force actuator (20) being connectable by means of a first mechanical interface (M1) to an unhooked tie rod (300) of the steering system (30), and the first main body (21) being mechanically connectable to a first fixed mounting point (P1) located on the chassis of the complete vehicle (3), the steering force module (2) being designed to generate by a displacement of the transverse force actuator (20) relative to the first main body (21) a transverse force (Q) independent of the torque (D), which transverse force (Q) can be applied to the steering system (30), **and in that** the second mounting point (P2) is a fixed mounting point.

2. Vehicle test bench (1) according to claim 1, **characterized in that** a second steering force module (2') is present which consists of a third main body (21') and a further transversely displaceable transverse force actuator (20'), the further transverse force actuator (20') being connectable by means of a third mechanical interface (M3) to the unhooked tie rod (300) of the steering system (30), and the third main body (21') being connectable to a third fixed mounting point (P3), the second steering force module (2') being designed to generate a further transverse force (Q') by a displacement of the further transverse force actuator (20') relative to the third main body (21), which transverse force (Q') can be applied to the steering system (30).

3. Vehicle test bench according to either claim 1 or claim 2, **characterized in that** a further drivetrain module (4) is present which consists of a fourth main body (41') and a further axially rotatable drive actuator (40'), the further drive actuator (40) being connectable by means of a fourth mechanical interface (M4) to the drivetrain (31) of the vehicle (3), and the fourth main body (41') being connectable to a fourth fixed mounting point (P4), the further drivetrain module (4) being designed to generate a further torque (D') that is independent of the transverse force (Q, Q') by a rotation of the further drive actuator (40') relative to the fourth main body (41'), which further torque (D') can be applied to the drivetrain (31).

4. Vehicle test bench according to any of claims 2 or 3, **characterized in that** the third fixed mounting point (P3) and/or the fourth fixed mounting point (P4) is located on the test bench (1).

5. Vehicle test bench according to any of claims 2 to 4, **characterized in that** third fixed mounting point (P3) and/or the fourth fixed mounting point (P4) is located on the roadworthy complete vehicle (3), preferably on the chassis of the complete vehicle (3).

6. Vehicle test bench according to any of claims 1 to 5, **characterized in that** a pivoting device (10) is provided which makes it possible to pivot the steering force module (2, 2') and/or the drivetrain module (4, 4') away from the complete vehicle (3), preferably horizontally.

7. Vehicle test bench according to any of claims 1 to 6, **characterized in that** a steering actuator (16) is present which is connectable to a steering axle (301) of the steering system (30) and is designed to exert a steering force (L) on the steering axle (301).

8. Vehicle test bench according to claim 7, **characterized in that** an engine present in the roadworthy complete vehicle (3) is used as the steering actuator (16).

9. Vehicle test bench according to any of claims 1 to 6, **characterized in that** a simulation unit (S) is present which is connected to the steering force modules (2, 2') and to the drivetrain modules (4, 4') and provides them with values for transverse force (Q) and torque (D).

10. Vehicle test bench according to claim 7 or claim 8, **characterized in that** a simulation unit (S) is present which is connected to the steering force modules (2, 2'), the drivetrain modules (4, 4') and the steering actuator (16) and provides them with values for transverse force (Q), torque (D) and steering force (L).

11. Vehicle test bench according to claim 9 or claim 10, **characterized in that** the simulation unit (S) is connectable to sensors (33) of the roadworthy complete vehicle (3), the control unit (32) being the external source for the reference values for the for transverse force (Q) and torque (D).

12. Vehicle test bench according to claim 9 or claim 11, **characterized in that** the simulation unit (S) is connectable to a control unit (32) of the roadworthy complete vehicle (3), the control unit (32) being the external source for the reference values for the for transverse force (Q) and torque (D).

13. Method for applying forces and/or torques on a roadworthy complete vehicle (3) at a vehicle test bench (1), the roadworthy complete vehicle (3) having a steering system (30) and a drivetrain (31), a drivetrain module (4) consisting of a second main body (41) and a drive actuator (40) that is rotatable relative thereto being rotationally connected by means of a second mechanical interface (M2) to a drive axle (310) of the drivetrain (31), and the second main body (41) being mechanically connected to a second mounting point (P2), a torque (D) being generated by a rotation of the drive actuator (40) relative to the second main body (41) and applied to the drive axle (310), **characterized in that** a steering force module (2) which consists of a first main body (21) and a transverse force actuator (20) that is displaceable relative thereto, is connected via the transverse force actuator (20) by means of a first mechanical interface (M1) to an unhooked tie rod (300) of the steering system (30), and the first main body (21) is mechanically connected to a first fixed mounting point (P1) located on the chassis of the complete vehicle (3), a transverse force (Q) independent of the torque (D) being generated by a displacement of the transverse force actuator (20) relative to the first main body (21) and applied to the steering system (30), **and in that** a fixed mounting point located on the test bench (1) is used as second mounting point (P2).

## Revendications

1. Banc d'essai de véhicule (1) pour un véhicule complet (3) prêt à rouler présentant un système de direction (30) et une chaîne cinématique (31), le banc d'essai de véhicule (1) étant réalisé pour appliquer des forces et/ou des couples sur le véhicule complet (3) prêt à rouler lors de l'utilisation correcte, un module de chaîne cinématique (4) étant présent, lequel est constitué d'un deuxième corps de base (41) et d'un actionneur d'entraînement (40) pouvant tourner par rapport à celui-ci, l'actionneur d'entraînement (40) pouvant être relié de manière solidaire en rotation à un essieu moteur (310) de la chaîne cinématique (31) par l'intermédiaire d'une deuxième interface mécanique (M2) et le deuxième corps de base (41) étant relié mécaniquement à un deuxième point de montage (P2) qui se trouve sur le banc d'essai (1), le module de chaîne cinématique (4) étant réalisé pour produire, par une rotation relative de l'actionneur d'entraînement (40) par rapport au deuxième corps de base (41), un couple de rotation (D) qui peut être appliqué à l'essieu moteur (310), **caractérisé en ce qu'**un module de force de direction (2) est présent, lequel est constitué d'un premier corps de base (21) et d'un actionneur de force transversale (20) déplaçable par rapport à celui-ci, l'actionneur de force transversale (20) pouvant être relié à une barre de direction désaccouplée (300) du système de direction (30) par l'intermédiaire d'une première interface mécanique (M1) et le premier corps de base (21) pouvant être relié mécaniquement à un premier point de montage fixe (P1) qui se trouve sur le châssis du véhicule complet (3), le module de force de direction (2) étant réalisé pour produire, par un déplacement relatif de l'actionneur de force transversale (20) par rapport au premier corps de base (21), une force transversale (Q) indépendante du couple de rotation (D), laquelle peut être appliquée au système de direction (30), **et en ce que** le deuxième point de montage (P2) est un point de montage fixe.

2. Banc d'essai de véhicule (1) selon la revendication 1,
**caractérisé en ce qu'**un second module de force de direction (2') est présent, lequel est constitué d'un troisième corps de base (21') et d'un autre actionneur de force transversale (20') déplaçable transversalement, l'autre actionneur de force transversale (20') pouvant être relié à la barre de direction désaccouplée (300) du système de direction (30) par l'intermédiaire d'une troisième interface mécanique (M3), et le troisième corps de base (21') pouvant être relié à un troisième point de montage fixe (P3), le second module de force de direction (2') étant réalisé pour produire une autre force transversale (Q') par un déplacement relatif de l'autre actionneur de force transversale (20') par rapport au troisième corps de base (21'), laquelle autre force transversale peut être appliquée au système de direction (30).

3. Banc d'essai de véhicule (1) selon la revendication 1 ou 2,
**caractérisé en ce qu'**un autre module de chaîne cinématique (4') est présent, lequel est constitué d'un quatrième corps de base (41') et d'un autre actionneur d'entraînement (40') pouvant tourner axialement, l'autre actionneur d'entraînement (40') pouvant être relié à la chaîne cinématique (31) du véhicule (3) par l'intermédiaire d'une quatrième interface mécanique (M4) et le quatrième corps de base (41') pouvant être relié à un quatrième point de montage fixe (P4), l'autre module de chaîne cinématique (4') étant réalisé pour produire un autre couple de rotation (D`) indépendant de la force transversale (Q, Q') par une rotation relative de l'autre actionneur d'entraînement (40') par rapport au quatrième corps de base (41'), lequel autre couple de rotation peut être appliqué à la chaîne cinématique (31).

4. Banc d'essai de véhicule (1) selon l'une des revendications 2 ou 3,
**caractérisé en ce que** le troisième point de montage fixe (P3) et/ou le quatrième point de montage fixe (P4) se trouvent sur le banc d'essai (1).

5. Banc d'essai de véhicule (1) selon l'une des revendications 2 à 4,
**caractérisé en ce que** le troisième point de montage fixe (P3) et/ou le quatrième point de montage fixe (P4) se trouvent sur le véhicule complet (3) prêt à rouler, de préférence sur le châssis du véhicule complet (3).

6. Banc d'essai de véhicule (1) selon l'une des revendications 1 à 5,
**caractérisé en ce qu'**un dispositif de pivotement (10) est prévu, lequel permet de faire pivoter, de préférence horizontalement, le module de force de direction (2, 2`) et/ou le module de chaîne cinématique (4, 4') par rapport au véhicule complet (3) prêt à rouler.

7. Banc d'essai de véhicule (1) selon l'une des revendications 1 à 6,
**caractérisé en ce qu'**un actionneur de direction (16) est présent, lequel peut être relié à un essieu directeur (301) du système de direction (30) et est conçu pour exercer une force de direction (L) sur l'essieu directeur (301).

8. Banc d'essai de véhicule (1) selon la revendication 7,
**caractérisé en ce qu'**un moteur présent dans le véhicule complet (3) prêt à rouler sert d'actionneur de direction (16).

9. Banc d'essai de véhicule (1) selon l'une des revendications 1 à 6,
**caractérisé en ce qu'**une unité de simulation (S) est présente, laquelle est reliée aux modules de force de direction (2, 2') et aux modules de chaîne cinématique (4, 4') et prédéfinit pour ceux-ci des valeurs pour la force transversale (Q) et le couple de rotation (D).

10. Banc d'essai de véhicule (1) selon l'une des revendications 7 ou 8,
**caractérisé en ce qu'**une unité de simulation (S) est présente, laquelle est reliée aux modules de force de direction (2, 2'), aux modules de chaîne cinématique (4, 4') et à l'actionneur de direction (16) et prédéfinit pour ceux-ci des valeurs pour la force transversale (Q), le couple de rotation (D) et la force de direction (L).

11. Banc d'essai de véhicule (1) selon l'une des revendications 9 ou 10,
**caractérisé en ce que** l'unité de simulation (S) peut être connectée à des capteurs (33) du véhicule complet (3) prêt à rouler, les capteurs (33) étant une source externe pour des valeurs de consigne pour la force transversale (Q, Q') et le couple de rotation (D, D').

12. Banc d'essai de véhicule (1) selon l'une des revendications 9 ou 11,
**caractérisé en ce que** l'unité de simulation (S) peut être connectée à un appareil de commande (32) du véhicule complet (3) prêt à rouler, l'appareil de commande (32) étant la source externe pour les valeurs de consigne pour la force transversale (Q, Q') et le couple de rotation (D, D').

13. Procédé permettant l'application de forces et/ou de couples sur un véhicule complet (3) prêt à rouler au niveau d'un banc d'essai de véhicule (1), le véhicule complet (3) prêt à rouler présentant un système de direction (30) et une chaîne cinématique (31), un module de chaîne cinématique (4) qui est constitué d'un deuxième corps de base (41) et d'un actionneur d'entraînement (40) pouvant tourner par rapport à celui-ci étant relié, par l'actionneur d'entraînement (40), de manière solidaire en rotation à un essieu moteur (310) de la chaîne cinématique (31) par l'intermédiaire d'une deuxième interface mécanique (M2) et le deuxième corps de base (41) étant relié mécaniquement à un deuxième point de montage (P2) qui se trouve sur le banc d'essai de véhicule (1), un couple de rotation (D) étant produit par une rotation relative de l'actionneur d'entraînement (40) par rapport au deuxième corps de base (41) et étant appliqué à l'essieu moteur (310), **caractérisé en ce qu'**un module de force de direction (2), lequel est constitué d'un premier corps de base (21) et d'un actionneur de force transversale (20) déplaçable par rapport à celui-ci, est relié par l'actionneur de force transversale (20) à une barre de direction désaccouplée (300) du système de direction (30) par l'intermédiaire d'une première interface mécanique (M1) et le premier corps de base (21) est relié mécaniquement à un premier point de montage fixe (P1) qui se trouve sur le châssis du véhicule complet (3) prêt à rouler, une force transversale (Q) indépendante du couple de rotation (D) étant produite par un déplacement relatif de l'actionneur de force transversale (20) par rapport au premier corps de base (21) et étant appliquée au système de direction (30), **et en ce qu'**un point de montage fixe est utilisé en tant que deuxième point de montage (P2).
